# EUROPEAN PATENT APPLICATION

(11) **EP 4 434 799 A1**
(43) Date of publication of application: **25.09.2024**
(21) Application number: 22907442.2
(22) Date of filing: 13.12.2022
(51) Int. Cl.: B60L 50/60, B61B 13/00, G05D 1/02

(54) **CONVEYING VEHICLE AND UNMANNED CONVEYING SYSTEM**

(30) Priority: 15.12.2021 JP 2021203191
(71) Applicant: DMG Mori Co., Ltd., Yamatokoriyama-shi, Nara 639-1160 (JP)
(72) Inventor: NAGASUE, Hideki, Yamatokoriyama-shi, Nara 639-1160 (JP); NAKAGAWA, Masaaki, Yamatokoriyama-shi, Nara 639-1160 (JP); ADACHI, Takashi, Yamatokoriyama-shi, Nara 639-1160 (JP)
(74) Representative: Isarpatent
(86) International application number: PCT/JP2022/045851
(87) International publication number: WO 2023/112918

(57) **Abstract**

A conveying vehicle (10) includes a power storage (21), a travel drive source (19, 20) driving a wheel of the conveying vehicle (10) by being driven by electric power stored in the power storage (21), a travel control unit (25) controlling driving of the travel drive source (19, 20), and a power supply unit (28) supplying electric power stored in the power storage (21) to a towed vehicle (50) as another vehicle.

## Description

### Technical Field

0001 The present invention relates to a conveying vehicle and to an unmanned conveying system including the conveying vehicle and a towed vehicle to be towed by the conveying vehicle.

### Background Art

0002 A conventionally known example of the unmanned conveying system is disclosed in Japanese Unexamined Patent Application Publication No. 2020-044859 (Patent Literature 1 listed below). In this unmanned conveying system, a towed carriage is coupled to an unmanned conveying vehicle. The unmanned conveying vehicle autonomously travels from a departure point to a destination point along a path set by a user. Thereby, an object loaded on the towed carriage is transported to the destination point.

### Citation List

### Patent Literature

0003 Patent Literature 1: Japanese Unexamined Patent Application Publication No. 2020-044859

### Summary of Invention

### Technical Problem

0004 In the unmanned conveying system disclosed in Patent Literature 1, for example, the towed carriage may have a travel motor (actuator) for travel assistance mounted thereon or may have a working robot (actuator) for workpiece loading and unloading mounted thereon.

0005 To mount an actuator on the towed carriage, it is necessary to further mount a power storage for supplying electric power to the actuator and a controller for controlling operation of the actuator. As a result, the traveling stability of the towed vehicle is impaired due to an increase in the total weight of the towed carriage. Further, the unmanned conveying vehicle towing the towed carriage becomes incapable of traveling due to power shortage.

0006 The present invention has been achieved in view of the above-described circumstances, and an object of the invention is to provide a conveying vehicle which suppresses an increase in the total weight of a towed vehicle and to provide an unmanned conveying system including the conveying vehicle.

### Solution to Problem

0007 To solve the above-described problem, the present invention provides a conveying vehicle including:
a power storage;
a travel drive source that drives a wheel by being driven by electric power stored in the power storage;
a travel control unit that controls the travel drive source; and
a power supply unit that supplies electric power stored in the power storage to another vehicle.

0008 The conveying vehicle according to this aspect is capable of supplying a part of the electric power stored in the power storage thereof to another vehicle. Therefore, it is not necessary to provide a power storage or the like on the other vehicle, so that the device configuration of the other vehicle can be simplified and the weight of the other vehicle can be reduced accordingly.

0009 In the above-described aspect, an aspect may be employed in which:
the other vehicle has an actuator that is actuated by receiving supply of electric power, and
the power supply unit is configured to supply electric power stored in the power storage to the actuator provided on the other vehicle.

In this aspect, it is possible to supply electric power can be supplied from the power storage provided on the conveying vehicle to the actuator provided on the other vehicle to operate the actuator. Note that the term "actuator" in the present invention encompasses all conventionally known electrically operated mechanical elements such as devices and instruments.

0010 In the above-described aspect, the power supply unit may be configured to supply the electric power by non-contact power supply.

Alternatively, an aspect may be employed in which:
the other vehicle has a power receiving unit that receives the electric power from the power supply unit;
a power supply surface of the power supply unit and a power receiving surface of the power receiving unit are disposed to face each other with a gap therebetween in a vertical direction; and
the power supply unit is configured to supply the electric power by non-contact power supply.

The action and effect of the non-contact power supply and the action and effect of the structure in which the power supply surface and the power receiving surface face each other with a gap therebetween in a vertical direction are the same also in the identically configured aspect described later.

0011 In the above-described aspect, an aspect may be employed in which:
the other vehicle has a travel motor as the actuator and has a driving wheel to be rotationally driven by the travel motor;
a tilt detection mechanism that detects a tilt angle of the other vehicle in a predetermined direction is further provided; and
the power supply control unit is configured to, when the tilt angle of the other vehicle detected by the tilt detection mechanism is equal to or greater than a predetermined amount, execute power supply from the power supply unit to the travel motor provided on the other vehicle so as to drive the travel motor of the other vehicle, and configured to, when the tilt angle is less than the predetermined amount, not execute the power supply from the power supply unit to the travel motor.

The action and effect of the power supply control by the power supply control unit based on the tilt angle detected by the tilt detection mechanism are the same also in the identically configured aspect described later.

0012 In the aspect in which the other vehicle has a travel motor as the actuator and a driving wheel to be rotationally driven by the travel motor, an aspect may be employed in which:
the other vehicle has as the driving wheel a left driving wheel and a right driving wheel and has as the travel motor a left travel motor and a right travel motor that respectively drive the left driving wheel and the right driving wheel; and
the power supply control unit is configured to be capable of changing a power supply ratio between the left travel motor and the right travel motor.

The action and effect of the power supply control unit in this aspect are the same also in the identically configured aspect described later.

0013 In the above-described aspect, an aspect may be employed in which:
the other vehicle includes as the actuator a braking actuator that generates a braking force of the other vehicle by receiving supply of electric power, and
a tilt detection mechanism that detects a tilt angle of the other vehicle in a predetermined direction and a weight estimation unit that estimates a loaded weight on the other vehicle based on the tilt angle of the other vehicle detected by the tilt detection mechanism are further provided; and
the power supply control unit is configured to, when the loaded weight estimated by the weight estimation unit is equal to or greater than a predetermined weight, execute the power supply so as to actuate the braking actuator at a time when the conveying vehicle is stopped by the travel control unit, and configured to, when the loaded weight is less than the predetermined weight, not execute the power supply so as not to actuate the actuator at the time when the conveying vehicle is stopped by the travel control unit. The action and effect of the power supply control by the power supply control unit based on the loaded weight estimated by the weight estimation unit in this aspect are the same also in the identically configured aspect described later.

0014 Further, an aspect may be employed in which:
the tilt detection mechanism includes a predetermined marker that is provided on the other vehicle;
an imaging device that is mounted on the conveying vehicle and images the predetermined marker;
a storage that stores as a reference image an image of the predetermined marker captured by the imaging device in a state where the other vehicle is not tilted in the predetermined direction; and
a tilt angle calculation unit that calculates the tilt angle of the other vehicle by comparing an captured image of the predetermined marker captured by the imaging device with the reference image.

The action and effect of the calculation of the tilt angle using the predetermined marker are the same also in the identically configured aspect described later.

0015 The present invention also provides
an unmanned conveying system including an unmanned conveying vehicle, which is encompassed by the above-described conveying vehicle, and a towed vehicle, which is encompassed by the above-described other vehicle, to be towed by the unmanned conveying vehicle, wherein:
the unmanned conveying vehicle has: a power storage; a travel drive source that drives a wheel of the unmanned conveying vehicle by being driven by electric power stored in the power storage; a travel control unit that controls the travel drive source; a power supply unit that supplies electric power stored in the power storage to the towed vehicle; and a power supply control unit that controls power supply performed by the power supply unit;
the towed vehicle has: a power receiving unit that receives the electric power from the power supply unit provided on the unmanned conveying vehicle; and an actuator that is driven by the electric power received by the power receiving unit; and
the power supply control unit is configured to control operation of the actuator by controlling power supply from the power supply unit to the power receiving unit provided on the towed vehicle.

0016 In this configuration, the travel drive source of the unmanned conveying vehicle is controlled under control by the travel control unit mounted on the unmanned conveying vehicle, whereby the unmanned conveying vehicle travels. The power for driving the travel drive source is supplied from the power storage mounted on the unmanned conveying vehicle. On the other hand, the actuator that is of an electrically operated type is mounted on the towed vehicle. This actuator may be, for example, an electric motor for driving a driving wheel of the towed vehicle. The unmanned conveying vehicle has the power supply unit to supply electric power stored in the power storage to the power receiving unit provided on the towed vehicle. Accordingly, the actuator is driven by the electric power the power receiving unit receives from the power supply unit. The power supply from the power supply unit to the power receiving unit is controlled by the power supply control unit mounted on the unmanned conveying vehicle. The power supply control includes, for example, control of the timing to supply the electric power to the power receiving unit and control of the amount of electric power to be supplied. By the control of the power supply from the power supply unit to the power receiving unit being executed under control by the power supply control unit, the timing to actuate the actuator and the operating speed of the actuator are controlled. Thus, control of the drive of the actuator is realized without newly mounting on the towed vehicle a power storage and a control unit for driving the actuator. Therefore, the control of the drive of the actuator is realized while an increase in the total weight of the towed vehicle is suppressed.

0017 It is preferred that the power supply unit is configured to perform the power supply to the power receiving unit by non-contact power supply.

0018 In this configuration, the power supply from the power supply unit provided on the unmanned conveying vehicle to the power receiving unit provided on the towed vehicle is performed in a non-contact manner. Therefore, it is not necessary to perform a wiring operation for electrically connecting the power supply unit and the power receiving unit when coupling the towed vehicle to the unmanned conveying vehicle. Consequently, the workload on the operator is reduced. If the power supply unit and the power receiving unit are connected by wires, there is a concern that the wires may be bent and disconnected every time the unmanned conveying vehicle turns. The non-contact power supply in this configuration enables the power supply from the power supply unit to the power receiving unit to be stably performed while the risk of wire disconnection is avoided.

0019 It is preferred that a power supply surface of the power supply unit and a power receiving surface of the power receiving unit are disposed to face each other with a gap therebetween in a vertical direction.

0020 In this configuration, the distance between the power supply surface of the power supply unit and the power receiving surface of the power receiving unit does not change even when the traveling direction of the unmanned conveying vehicle changes. This enables a constant power supply efficiency to be maintained.

0021 It is preferred that: the actuator provided on the towed vehicle includes a travel motor that rotates by receiving supply of electric power; and the towed vehicle has a driving wheel to be rotationally driven by the travel motor.

0022 In this configuration, the actuator provided on the towed vehicle is constituted by the travel motor that rotates the driving wheel of the towed vehicle, and this travel motor is driven by the electric power supplied from the power supply unit of the unmanned conveying vehicle to the power receiving unit of the towed vehicle. The power supply from the power supply unit to the power receiving unit is controlled by the power supply control unit mounted on the unmanned conveying vehicle, whereby operation of the travel motor is controlled. Thus, the driving wheel of the towed vehicle is rotationally driven by the travel motor without newly mounting a power storage and a control unit on the towed vehicle, so that the traveling stability of the towed vehicle is improved.

0023 It is preferred that: the unmanned conveying system further includes a tilt detection mechanism that detects a tilt angle of the towed vehicle in a predetermined direction; and the power supply control unit is configured to, when the tilt angle of the towed vehicle detected by the tilt detection mechanism is equal to or greater than a predetermined amount, execute the power supply from the power supply unit to the power receiving unit provided on the towed vehicle so as to drive the travel motor of the towed vehicle, and configured to, when the tilt angle is less than the predetermined amount, not execute the power supply from the power supply unit to the power receiving unit.

0024 In this configuration, a tilt angle of the towed vehicle in a predetermined direction (for example, a vehicle width direction) is detected by the tilt detection mechanism. When the tilt angle of the towed vehicle in the predetermined direction detected by the tilt detection mechanism is equal to or greater than a predetermined amount, electric power is supplied from the power supply unit to the power receiving unit of the towed vehicle under control of the power supply control unit. This electric power is supplied to the travel motor (actuator) provided on the towed vehicle, and the travel motor supplied with this electric power rotationally drives the driving wheel of the towed vehicle. Thus, when the tilt angle of the towed vehicle is equal to or greater than the predetermined amount, the driving wheel of the towed vehicle is driven by the travel motor. Thereby, the towed vehicle that is traveling in an unstable state is stabilized and the tilt angle of the towed vehicle is reduced. On the other hand, when the tilt angle of the towed vehicle detected by the tilt detection mechanism is less than the predetermined amount, the power supply from the power supply unit of the unmanned conveying vehicle to the power receiving unit of the towed vehicle is not executed. Therefore, the travel motor of the towed vehicle is prevented from being unnecessarily driven when the tilt angle of the towed vehicle is relatively small. Consequently, the power consumption of the entire system is reduced.

0025 It is preferred that: the towed vehicle has as the driving wheel a left driving wheel and a right driving wheel, has as the travel motor a left travel motor and a right travel motor that respectively drive the left driving wheel and the right driving wheel, and has as the power receiving unit a left power receiving unit and a right power receiving unit that respectively receive electric power for driving the left travel motor and electric power for driving the right travel motor; the unmanned conveying vehicle has as the power supply unit a left power supply unit and a right power supply unit that respectively supply electric power to the left power receiving unit and the right power receiving unit; and the power supply control unit is configured to be capable of changing a power supply ratio between the left power supply unit and the right power supply unit.

0026 In this configuration, the power supply ratio between the left power supply unit and right power supply unit of the unmanned conveying vehicle can be changed by the power supply control unit, whereby the ratio between the rotational speeds of the left travel motor and right travel motor of the towed vehicle can be changed. Therefore, for example, when the towed vehicle turns following turning of the unmanned conveying vehicle, the rotational speeds of the left and right driving wheels can be controlled by the control of the power supply ratio by the power supply control unit so that the angular velocity of the towed vehicle about the turning center is constant. Thereby, slipping of the right and left driving wheels during the turning travel of the towed vehicle is suppressed. Consequently, the traveling stability of the towed vehicle is improved.

0027 It is preferred that the actuator provided on the towed vehicle includes a braking actuator that generates a braking force of the towed vehicle by receiving supply of electric power.

0028 In this configuration, the towed vehicle includes the braking actuator that generates a braking force. This braking actuator is actuated by electric power being supplied from the power supply unit of the unmanned conveying vehicle to the power receiving unit of the towed vehicle under control by the power supply control unit, so that the braking force generated is applied to the towed vehicle. Therefore, supplying electric power from the power supply unit to the power receiving unit to actuate the braking actuator of the towed vehicle at the time when the unmanned conveying vehicle is stopped prevents shortage of the force for braking the towed vehicle.

0029 It is preferred that: the unmanned conveying system further includes a tilt detection mechanism that detects a tilt angle of the towed vehicle in a predetermined direction and a weight estimation unit that estimates a loaded weight on the towed vehicle based on the tilt angle of the towed vehicle detected by the tilt detection mechanism; and the power supply control unit is configured to, when the loaded weight estimated by the weight estimation unit is equal to or greater than a predetermined weight, execute the power supply from the power supply unit to the power receiving unit so as to actuate the braking actuator at a time when the unmanned conveying vehicle is stopped by the travel control unit, and configured, when the loaded weight is less than the predetermined weight, not execute the power supply from the power supply unit to the power receiving unit so as not to actuate the braking actuator at the time when the unmanned conveying vehicle is stopped by the travel control unit.

0030 In this configuration, a loaded weight on the towed vehicle (the weight of a loaded object) is estimated by the weight estimation unit based on a tilt angle of the towed vehicle in a predetermined direction (for example, a vehicle width direction) detected by the tilt detection mechanism. When the loaded weight on the towed vehicle estimated by the weight estimation unit is equal to or greater than a predetermined weight, the power supply from the power supply unit to the power receiving unit is executed under control by the power supply control unit so as to actuate the braking actuator at the time when the unmanned conveying vehicle is stopped by the travel control unit. This prevents the towed vehicle from colliding with the unmanned conveying vehicle due to the inertia force at the time when the unmanned conveying vehicle is stopped. On the other hand, when the loaded weight on the towed vehicle is less than the predetermined weight, the power supply from the power supply unit to the power receiving unit is not executed at the time when the unmanned conveying vehicle is stopped. This prevents the electric power from being unnecessarily supplied to the braking actuator when the loaded weight on the towed vehicle is small. Consequently, the power consumption of the entire system is reduced.

0031 It is preferred that the tilt detection mechanism includes: a predetermined marker (including a character and a figure indicating a predetermined shape) that is provided on the towed vehicle; an imaging device that is mounted on the unmanned conveying vehicle and images the predetermined marker; a storage that stores, as a reference image, an image of the predetermined marker captured by the imaging device in a state (reference state) where the towed vehicle is not tilted; and a tilt angle calculation unit that calculates a tilt angle of the towed vehicle by comparing a current captured image of the predetermined marker captured by the imaging device with the reference image.

0032 In this configuration, an image of the predetermined marker provided on the towed vehicle is captured by the imaging device mounted on the unmanned conveying vehicle. This image captured by the imaging device is compared with the reference image that is an image of the predetermined marker captured by the imaging device in a state where the towed vehicle is not tilted in the predetermined direction. Based on this comparison, a tilt angle of the towed vehicle in the predetermined direction is calculated by the tilt angle calculation unit. Thus, this configuration enables the tilt angle of the towed vehicle in the predetermined direction to be easily detected by a simple image processing.

### Advantageous Effects of Invention

0033 The unmanned conveying system according to the present invention is configured such that: the unmanned conveying vehicle has the power supply unit; the towed vehicle has the power receiving unit that receives from the power supply unit electric power for driving the actuator mounted on the towed vehicle; and the power supply from the power supply unit to the power receiving unit is controlled by the power supply control unit mounted on the unmanned conveying vehicle. Therefore, this unmanned conveying system realizes control of the drive of the actuator mounted on the towed vehicle while keeping the total weight of the towed vehicle as small as possible.

### Brief Description of Drawings

0034
FIG. 1 is a side view of an unmanned conveying system according to Embodiment 1 as viewed from a vehicle left side;
FIG. 2 is a plan view of the unmanned conveying system according to the Embodiment 1;
FIG. 3 is a block diagram showing control in the unmanned conveying system according to the Embodiment 1;
FIG. 4 corresponds to FIG. 1 but shows Embodiment 2;
FIG. 5 corresponds to FIG. 2 but shows the Embodiment 2;
FIG. 6 corresponds to FIG. 2 but shows Embodiment 3;
FIG. 7 corresponds to FIG. 3 but shows the Embodiment 3;
FIG. 8 corresponds to FIG. 1 but shows Embodiment 4;
FIG. 9 corresponds to FIG. 3 but shows the Embodiment 4;
FIG. 10 is an illustrating diagram for explaining an algorithm for calculation of a tilt angle of a carriage by a tilt angle calculation unit of the unmanned conveying system according to the Embodiment 4;
FIG. 11 corresponds to FIG. 2 but shows Embodiment 5; and
FIG. 12 corresponds to FIG. 3 but shows the Embodiment 5.

### Description of Embodiments

0035 Hereinafter, specific embodiments of the present invention will be described with reference to the drawings.

0036

### <<Embodiment 1>>

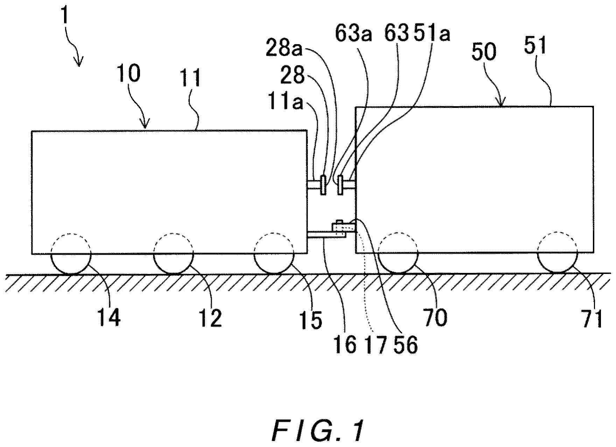

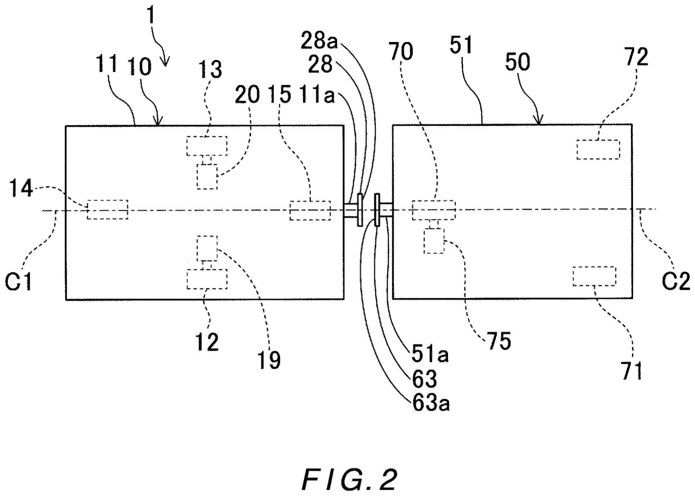

As shown in FIGS. 1 and 2, an unmanned conveying system 1 according to Embodiment 1 includes an unmanned conveying vehicle 10 and a carriage 50 (an example of the towed vehicle). The unmanned conveying vehicle 10 corresponds to the conveying vehicle. The carriage 50 corresponds to another vehicle detachably coupled to the unmanned conveying vehicle 10. The unmanned conveying vehicle 10 according to this embodiment travels tracklessly to a destination point, which is set by an operator, while avoiding obstacles, whereby an object loaded on the carriage 50 is transported to the destination point. Note that the unmanned conveying vehicle 10 is not limited to a trackless vehicle. For example, the unmanned conveying vehicle 10 may be a rail-guided vehicle that travels while detecting a magnetic tape or a reflective member laid on a floor surface. In this example, the conveying vehicle is an unmanned conveying vehicle. However, the conveying vehicle is not limited to an unmanned conveying vehicle and may be a manned conveying vehicle that is operated by an operator. Further, the towed vehicle is not limited to the carriage 50 described here and can be any vehicle capable of traveling with wheels.

0037 By way of example, the conveying vehicle is described with respect to a conveying vehicle fundamentally having at least a wheel, a power storage, a travel drive source (for example, an electric motor), a travel control unit, and a power supply unit. The travel drive source drives the wheel by being driven by electric power stored in the power storage. The travel control unit controls the travel drive source. The power supply unit supplies the electric power stored in the power storage to another vehicle.

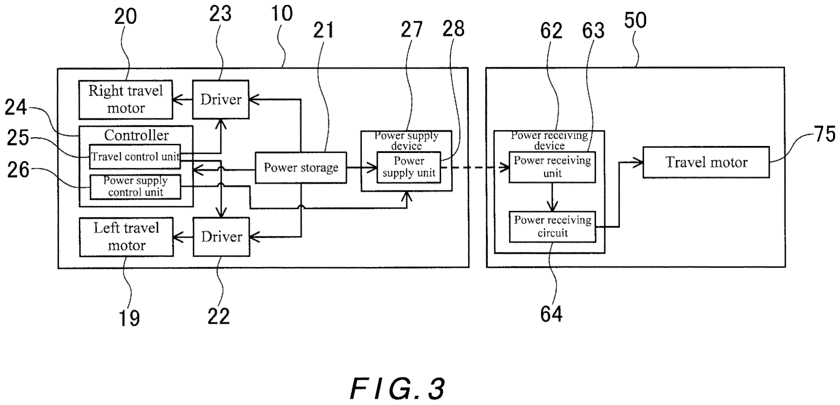

0038 The unmanned conveying vehicle 10 has a vehicle body 11 having a rectangular parallelepiped shape elongated in the vehicle front-rear direction. As shown in FIG. 3, which is described later, the vehicle body 11 has a power storage 21 as an example of the power storage, a controller 24, and a power supply device 27 mounted thereon. In the following description, the terms "front" and "rear" respectively mean the front side and the rear side in the vehicle front-rear direction and the terms "left" and "right" respectively mean the left side and the right side in the vehicle width direction.

0039 As shown in FIG. 2, the vehicle body 11 has a left driving wheel 12, a right driving wheel 13, a front driven wheel 14, and a rear driven wheel 15, which are and example of the wheel, attached to a lower surface thereof. The left driving wheel 12 and the right driving wheel 13 are arranged symmetrically about the center line C1 in the vehicle width direction at the center in the vehicle front-rear direction on the lower surface of the vehicle body 11. The left driving wheel 12 and the right driving wheel 13 are rotationally driven by a left travel motor 19 and a right travel motor 20, which are an example of the travel drive source, respectively coupled to axels of the left driving wheel 12 and right driving wheel 13. In this example, the travel motors 19 and 20 are each composed of a DC motor. In this example, the unmanned conveying vehicle 10 does not have a dedicated steering mechanism. The unmanned conveying vehicle 10 implements a steering function by using a travel control unit 25, which is described later, to make the rotational speeds of the left and right travel motors 19 and 20 different from each other. The travel control unit 25 is an example of the travel control unit.

0040 The front driven wheel 14 and the rear driven wheel 15 are located on the center line C1 in plan view. The front driven wheel 14 and the rear driven wheel 15 are each composed of a caster wheel that is able to turn following the traveling direction of the unmanned conveying vehicle 10.

0041 The vehicle body 11 has a coupling plate 16 that is connected to a center position in the vehicle width direction on a rear side surface the vehicle body 11 so as to extend horizontally rearward (see FIG. 1, omitted in FIG. 2). The coupling plate 16 has a coupling pin 17 that protrudes from a rear end of the coupling plate 16. The coupling plate 16 is connected to a coupling plate 56 of the carriage 50 through the coupling pin 17.

0042 The vehicle body 11 has a protruding duct 11a that is connected to a position above the coupling plate 16 on the rear side surface of the vehicle body 11 so as to protrude horizontally rearward. The protruding duct 11a has a power supply unit 28 fixed to a distal end thereof. The power supply unit 28 is an example of the power supply unit and is a part of the power supply device 27. In the protruding duct 11a, wires connected to the power supply unit 28 are inserted. The power supply unit 28 has a power supply surface 28a as a vertical surface facing the rear side of the unmanned conveying vehicle 10. The power supply device 27 supplies a part of electric power stored in the power storage 21 to a power receiving unit 63 of the carriage 50, which is described later, via the power supply unit 28.

0043 As shown in FIG. 3, the power storage 21 is composed of, for example, a rechargeable battery or a capacitor. The power storage 21 is connected to the left travel motor 19 and the right travel motor 20 through drivers 22 and 23 so as to supply electric power to the left travel motor 19 and the right travel motor 20. The power storage 21 is also connected to the controller 24 and the power supply device 27 so as to supply electric power to the controller 24 and the power supply device 27.

0044 The power supply device 27 is configured to supply electric power to a power receiving unit 63 of a power receiving device 62, which is mounted on the carriage 50, in a non-contact manner via the power supply unit 28. The power supply from the power supply unit 28 to the power receiving unit 63 is performed by, for example, but not limited to, electromagnetic induction. The power supply may be performed by radio waves, electric field resonance, magnetic field resonance, or the like.

0045 Returning to FIGS. 1 and 2, the carriage 50 has a carriage body 51 having a rectangular parallelepiped shape elongated in the vehicle front-rear direction. The carriage body 51 has a power receiving device 62 (see FIG. 3) mounted thereon that receives electric power from the power supply device 27. Further, the carriage body 51 has a housing space therein that is capable of housing a loaded object such as a workpiece. Note that, as shown in FIG. 3, the carriage 50 is not provided with a power storage equivalent to the power storage 21 provided on the unmanned conveying vehicle 10.

0046 The carriage body 51 has a driving wheel 70, a left driven wheel 71, and a right driven wheel 72 mounted on a lower surface thereof. The driving wheel 70 is arranged at the center in the vehicle width direction at a vehicle front end of the carriage body 51. The driving wheel 70 is driven by a travel motor 75 (an example of the actuator) coupled to an axle of the driving wheel 70. In this example, the travel motor 75 is composed of a DC motor. The left driven wheel 71 and the right driven wheel 72 are arranged symmetrically about the center line C2 in the vehicle width direction at a vehicle rear end of the carriage body 51. The driven wheels 71 and 72 are each composed of a caster wheel that is able to turn following the traveling direction of the carriage 50.

0047 The vehicle body 51 has a coupling plate 56 that is connected to a center position in the vehicle width direction on a front side surface of the carriage body 51 so as to extend horizontally frontward (see FIG. 1, omitted in FIG. 2). The coupling plate 56 has an engagement hole (not shown) formed in at a front end thereof. This engagement hole is turnably engaged with the coupling pin 17 provided on the coupling plate 16 of the unmanned conveying vehicle 10, whereby the unmanned conveying vehicle 10 and the carriage 50 are coupled to each other through the coupling plates 16 and 56.

0048 The carriage body 51 has a protruding duct 51a that is connected to a position above the coupling plate 56 on the front side surface of the carriage body 51 so as to protrude horizontally frontward. The protruding duct 51a has a power receiving unit 63 fixed to a distal end thereof. The power receiving unit 63 is a part of the power receiving device 62. The power receiving unit 63 has a power receiving surface 63a as a vertical surface facing the front side of the carriage 50. The power receiving surface 63a and the power supply surface 28a of the power supply unit 28 provided on the unmanned conveying vehicle 10 face each other in parallel when the unmanned conveying vehicle 10 travels straight (when the center line C1 of the unmanned conveying vehicle 10 and the center line C2 of the carriage 50 are positioned on the same straight line in plan view).

0049 As shown in FIG. 3, the power receiving device 62 has the power receiving unit 63 and a power receiving circuit 64. The power receiving unit 63 receives electric power supplied from the power supply unit 28 of the unmanned conveying vehicle 10. The power receiving circuit 64 smooths the electric power received by the power receiving unit 63 and converts it into direct-current power, and thereafter supplies the direct-current power to the travel motor 75. Note that the electric power supplied from the power supply unit 28 to the power receiving unit 63 includes a control signal for controlling the travel motor 75, besides the electric power for driving the travel motor 75. At least the electric power for driving the travel motor 75 is supplied from the power supply unit 28 to the power receiving unit 63.

0050 The power supply from the power supply unit 28 of the unmanned conveying vehicle 10 to the power receiving unit 63 of the carriage 50 is controlled by the controller 24 mounted in the vehicle body 11.

0051 As shown in FIG. 3, the controller 24 has a travel control unit 25 and a power supply control unit 26. The controller 24 is composed of a computer including a CPU, a RAM, and a ROM. The travel control unit 25 and the power supply control unit 26 are functionally implemented by a computer program to execute the processes described later.

0052 The travel control unit 25 executes, for example, a program based on the Simultaneous Localization and Mapping (SLAM) method that simultaneously performs self-position estimation and environment map creation. The travel control unit 25 calculates a travel path from the current position of the unmanned conveying vehicle 10 to the destination point and controls the rotational speeds of the left travel motor 19 and right travel motor 20 via the drivers 22 and 23 to cause the unmanned conveying vehicle 10 to travel along the calculated travel path. That is to say, when causing the unmanned conveying vehicle 10 to travel straight along the calculated travel path, the travel control unit 25 rotates the left travel motor 19 and the right travel motor 20 at the same speed. When causing the unmanned conveying vehicle 10 to turn, the travel control unit 25 rotates the motors 19 and 20 at different speeds depending on the direction and radius of the turning of the unmanned conveying vehicle 10.

0053 The power supply control unit 26 determines, based on an operation signal from an operation panel (not shown) provided on a side surface of the unmanned conveying vehicle 10, whether a towing mode for towing the carriage 50 is set or not. Upon determining that the towing mode is set, the power supply control unit 26 executes the control of the power supply from the power supply unit 28 of the power supply device 27 to the power receiving unit 63. Specifically, the power supply control unit 26 obtains the state of the travel of the unmanned conveying vehicle 10 from the travel control unit 25. Upon determining that the unmanned conveying vehicle 10 is now traveling, the power supply control unit 26 executes the power supply from the power supply unit 28 to the power receiving unit 63. Upon determining that the unmanned conveying vehicle 10 is now stopped, the power supply control unit 26 stops the power supply from the power supply unit 28 to the power receiving unit 63. In the execution of the power supply from the power supply unit 28 to the power receiving unit 63 based on the determination that the unmanned conveying vehicle 10 is now traveling, the power supply control unit 26 controls the power supplied from the power supply unit 28 to the power receiving unit 63 such that the carriage 50 and the unmanned conveying vehicle 10 travel at the same speed.

0054 On the other hand, upon determining based on an operation signal from the operation panel provided on the side surface of the unmanned conveying vehicle 10 that the towing mode is not set, the power supply control unit 26 does not execute the above-described power supply control. In this situation, the electric power stored in the power storage 21 is only supplied to the travel motors 19 and 20 of the unmanned conveying vehicle 10.

0055 In the unmanned conveying system 1 having the above-described configuration, when the unmanned conveying vehicle 10 starts travel toward the destination point in the state where the towing mode is set on the operation panel of the unmanned conveying vehicle 10, electric power is supplied from the power supply unit 28 of the unmanned conveying vehicle 10 to the power receiving unit 63 of the carriage 50 under control by the power supply control unit 26. The supplied electric power is converted into direct-current power through the power receiving circuit 64 and then supplied to the travel motor 75 of the carriage 50. Thereby, the driving wheel 70 of the carriage 50 is rotationally driven by the travel motor 75 supplied with the electric power. On the other hand, when the travel of the unmanned conveying vehicle 10 is stopped, the power supply control unit 26 stops the power supply from the power supply unit 28 to the power receiving unit 63. Thereby, the rotation of the travel motor 75 of the carriage 50 is also stopped.

0056 Thus, according to this embodiment, the carriage 50 travels using the power of the travel motor 75 during the travel of the unmanned conveying vehicle 10. This enables a sufficient traveling stability of the carriage 50 to be ensured in a situation where the traveling stability of the carriage 50 is likely to be impaired, such as during the turning travel of the unmanned conveying vehicle 10. Further, the electric power for driving the travel motor 75 provided on the carriage 50 is supplied from the power storage 21 mounted on the unmanned conveying vehicle 10 via the power supply device 27. Furthermore, the controller 24 controlling the power supply device 27 is also mounted on the unmanned conveying vehicle 10. Therefore, it is not necessary to mount on the carriage 50 a power storage and a controller for driving the travel motor 75. This suppresses an increase in the total weight of the carriage 50. Consequently, problems caused by an increase in the total weight of the carriage 50, such as reduction of the traveling stability of the carriage 50 and shortage of the power of the unmanned conveying vehicle 10, are avoided.

0057 Further, the power supply unit 28 of the unmanned conveying vehicle 10 is configured to supply electric power to the power receiving unit 63 of the carriage 50 in a non-contact manner.

0058 This configuration does not need a wiring operation for electrically connecting the power supply unit 28 and the power receiving unit 63 when coupling the carriage 50 to the unmanned conveying vehicle 10. If the power supply unit 28 and the power receiving unit 63 are connected by wires, there is a concern that the wires may be bent and disconnected every time the unmanned conveying vehicle 10 turns. The non-contact power supply configuration enables the power supply from the power supply unit 28 to the power receiving unit 63 to be stably performed while the risk of wire disconnection is avoided.

0059

### <<Embodiment 2»

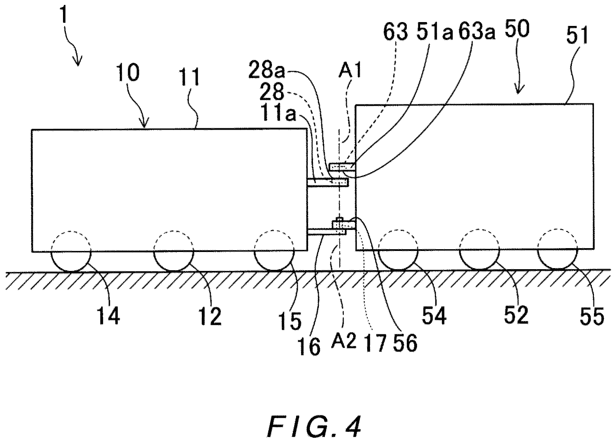

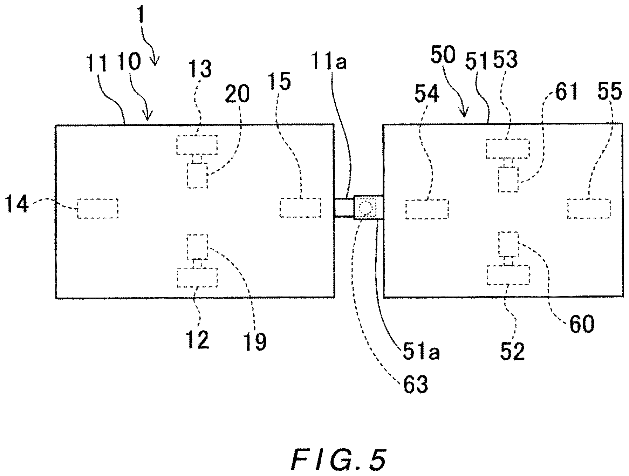

Embodiment 2 of the present invention is illustrated in FIGS. 4 and 5. This embodiment differs from the Embodiment 1 in terms of the configuration of the power supply unit 28 and power receiving unit 63. Except for this difference, this embodiment is configured identically to the Embodiment 1. In the following embodiments, the components identical to those of the Embodiment 1 are denoted by the same reference numerals used for the Embodiment 1 and the detailed description thereof is omitted.

0060 In this embodiment, the power supply surface 28a of the power supply unit 28 and the power receiving surface 63a of the power receiving unit 63 are each formed as a horizontal surface and they are disposed to face each other in the vertical direction. The power supply surface 28a and the power receiving surface 63a each have a circular shape in plan view and they are disposed coaxially with each other. The axial center A1 of the power supply surface 28a and power receiving surface 63a is coaxial with the axial center A2 of the coupling pin 17.

0061 In this embodiment, the power supply surface 28a of the power supply unit 28 and the power receiving surface 63a of the power receiving unit 63 face each other in the vertical direction. This enables the distance between the power supply surface 28a of the power supply unit 28 and the power receiving surface 63a of the power receiving unit 63 to be maintained constant even when the traveling direction of the unmanned conveying vehicle 10 changes. Therefore, the efficiency of the power supply from the power supply unit 28 to the power receiving unit 63 is maintained constant regardless of the traveling direction of the unmanned conveying vehicle 10.

0062 Further, the axial center A1 of the power supply surface 28a and power receiving surface 63a is coaxial with the axial center A2 of the coupling pin 17. This enables the area of the facing of the power supply surface 28a and power receiving surface 63a to be maintained constant even if the angle of the carriage 50 around the coupling pin 17 changes during the turning travel of the unmanned conveying vehicle 10. Therefore, the efficiency of the power supply from the power supply unit 28 to the power receiving unit 63 is reliably maintained constant.

0063

### <<Embodiment 3>>

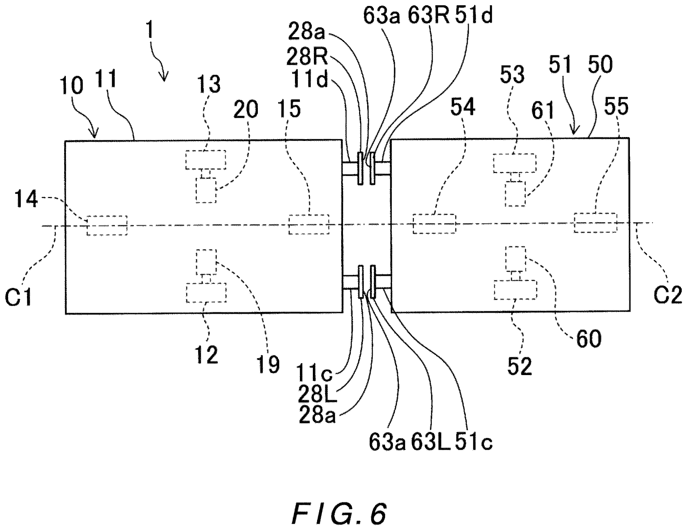

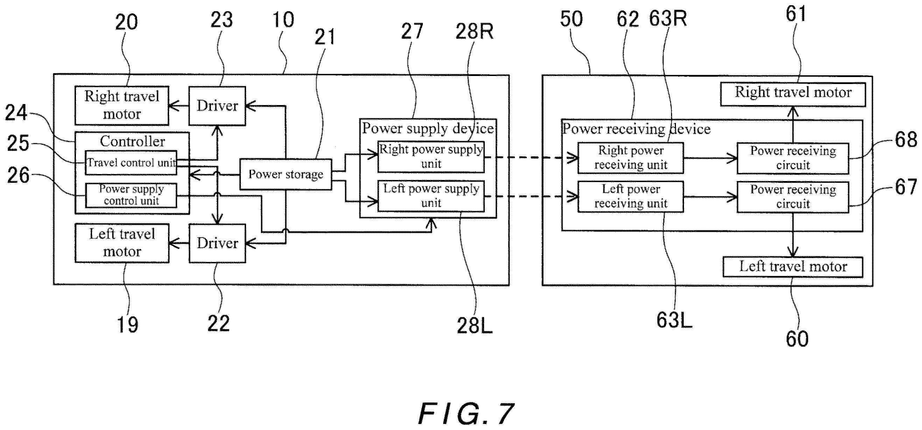

Embodiment 3 of the present invention is illustrated in FIGS. 6 and 7. The Embodiment 3 differs from the Embodiment 1 in terms of the wheel configuration of the carriage 50 and the configuration of the power supply unit 28 and power receiving unit 63.

0064 First, the wheel configuration of the carriage 50 is described with reference to FIG. 6. The carriage 50 has a left driving wheel 52, a right driving wheel 53, a front driven wheel 54, and a rear driven wheel 55. The left driving wheel 52 and the right driving wheel 53 are arranged symmetrically about the center line C2 in the vehicle width direction at the center in the vehicle front-rear direction on the carriage body 51. The front driven wheel 54 and the rear driven wheel 55 are located on the center line C2 in plan view. The left driving wheel 52 and the right driving wheel 53 are driven by a left travel motor 60 and a right travel motor 61 respectively coupled to axels of the left driving wheel 52 and right driving wheel 53.

0065 Next, the configuration of the power supply unit 28 and power receiving unit 63 is described with reference to FIGS. 6 and 7. The power supply unit 28 provided on the unmanned conveying vehicle 10 consists of a left power supply unit 28L and a right power supply unit 28R. The power receiving unit 63 provided on the carriage 50 consists of a left power receiving unit 63L and a right power receiving unit 63R. The left power receiving unit 63L receives electric power from the left power supply unit 28L. The right power receiving unit 63R receives electric power from the right power supply unit 28R.

0066 As shown in FIG. 6, the vehicle body 11 of the unmanned conveying vehicle 10 has a left protruding duct 11c and a right protruding duct 11d that protrude from the rear side surface of the vehicle body 11. The left protruding duct 11c and the right protruding duct 11d are spaced from each other in the vehicle width direction. The left protruding duct 11c and the right protruding duct 11d are arranged symmetrically about the center line C1 in the vehicle width direction in plan view. The left power supply unit 28L is fixed to a distal end of the left protruding duct 11c. The right power supply unit 28R is fixed to a distal end of the right protruding duct 11d.

0067 The carriage body 51 has a left protruding duct 51c and a right protruding duct 51d that protrude from the front side surface of the carriage body 51. The left protruding duct 51c and the right protruding duct 51d are spaced from each other in the vehicle width direction. The left protruding duct 51c and the right protruding duct 51d are arranged symmetrically about the center line C2 in the vehicle width direction in plan view. The left power receiving unit 63L is fixed to a distal end of the left protruding duct 51c. The right power receiving unit 63R is fixed to a distal end of the right protruding duct 51d.

0068 Power supply surfaces 28a of the power supply units 28L and 28R face power receiving surfaces 63a of the power receiving units 63L and 63R in the vehicle front-rear direction when the unmanned conveying vehicle 10 travels straight (the state shown in FIG. 6).

0069 As shown in FIG. 7, the power receiving device 62 has a power receiving circuit 67 and a power receiving circuit 68. The power receiving circuit 67 is connected to the left power receiving unit 63L. The power receiving circuit 68 is connected to the right power receiving unit 63R. The electric power supplied from the left power supply unit 28L of the unmanned conveying vehicle 10 to the left power receiving unit 63L of the carriage 50 is converted into direct-current power by the power receiving circuit 67 (see FIG. 7) and then supplied to the left travel motor 60. The electric power supplied from the right power supply unit 28R of the unmanned conveying vehicle 10 to the right power receiving unit 63R of the carriage 50 is converted into direct-current power by the power receiving circuit 68 and then supplied to the right travel motor 61.

0070 In executing the power supply control, the power supply control unit 26 controls a power supply ratio between the left power supply unit 28L and the right power supply unit 28R, thereby controlling a speed ratio between the left travel motor 60 and right travel motor 61 of the carriage 50. Specifically, the power supply control unit 26 obtains the state of the travel of the unmanned conveying vehicle 10 from the travel control unit 25. Upon determining based on the obtained state that the unmanned conveying vehicle 10 is now traveling straight (forward or backward), the power supply control unit 26 sets the power supply ratio between the left power supply unit 28L and the right power supply unit 28R to 1:1, thereby driving the left travel motor 60 and right travel motor 61 of the carriage 50 at the same speed. On the other hand, upon determining that the unmanned conveying vehicle 10 is now turning, the power supply control unit 26 makes a difference between the electric power supplied by the left power supply unit 28L and the electric power supplied by the right power supply unit 28R according to the radius of the turning the carriage 50, thereby producing a speed difference between the left travel motor 60 and right travel motor 61 of the carriage 50 to match the turning angular velocities of the left driving wheel 52 and right driving wheel 53.

0071 In this embodiment, as described above, the power supply control unit 26 is configured to be capable of changing the power supply ratio between the left power supply unit 28L and the right power supply unit 28R. This enables the rotational speed ratio between the left travel motor 60 and the right travel motor 61 during the turning travel of the carriage 50 to be controlled; consequently, the traveling stability of the carriage 50 is improved.

0072

### <<Embodiment 4»

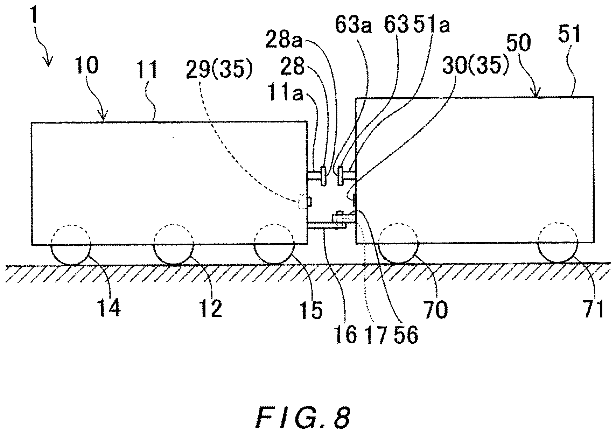

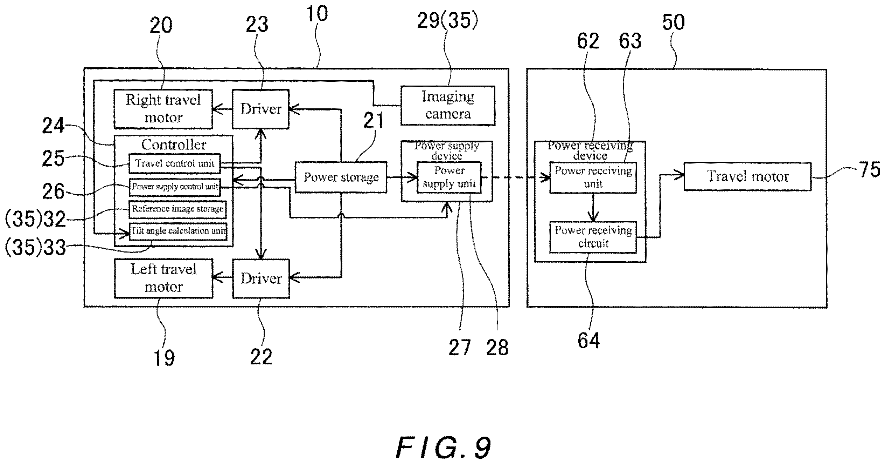

Embodiment 4 of the present invention is illustrated in FIGS. 8 and 9. This embodiment differs from the Embodiment 1 in that a tilt detection mechanism 35 is provided that detects a tilt angle of the carriage 50 in the vehicle width direction (an example of the predetermined direction) and in that the power supply control unit 26 executes the power supply control based on the tilt angle of the carriage 50 detected by the tilt detection mechanism 35.

0073 The unmanned conveying system 1 according to this embodiment includes, as the tilt detection mechanism 35, an imaging device 29, a predetermined marker 30, a reference image storage 32, and a tilt angle calculation unit 33. The imaging device 29 is mounted on the unmanned conveying vehicle 10. The predetermined marker 30 is attached to the carriage 50. The reference image storage 32 and the tilt angle calculation unit 33 are provided in the controller 24, which is described later.

0074 The predetermined marker 30 is attached to a center position in the vehicle width direction on the front side surface of the carriage body 51. In this example, the predetermined marker 30 is a square graphic marker. The imaging device 29 is composed of, for example, a CCD camera or the like and is mounted on the rear side surface of the vehicle body 11. The imaging device 29 captures an image of the predetermined marker 30 and transmits the captured image to the tilt angle calculation unit 33. Note that the predetermined marker 30 is not limited to a square shape and may be, for example, a triangular shape or a rhombic shape. Further, the predetermined marker 30 is not limited to a graphic marker and may be, for example, a character marker or the like.

0075 As shown in FIG. 9, the controller 24 has the travel control unit 25, the power supply control unit 26, the reference image storage 32, and the tilt angle calculation unit 33. The tilt angle calculation unit 33 is functionally implemented by a computer program similarly to the travel control unit 25 and the power supply control unit 26. The reference image storage 32 is implemented by a storage medium such as a ROM.

0076 The reference image storage 32 stores a previously stored reference image g2 that is an image of the predetermined marker 30 captured by the imaging device 29 in a state where the carriage 50 is not tilted in the vehicle width direction.

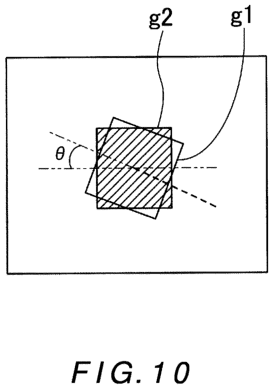

0077 As shown in FIG. 10, the tilt angle calculation unit 33 compares the captured image g1 captured by the imaging device 29 with the reference image g2 stored in the reference image storage 32 to calculate a tilt angle of the carriage 50 in the vehicle width direction (a tilt angle in the vehicle width direction with respect to the vertically upward direction, in other words, an angle formed by the vehicle width direction and a horizontal plane). Specifically, the power supply control unit 26 calculates a tilt angle θ of the captured image g1 with respect to the reference image g2 and calculates the tilt angle of the carriage 50 in the vehicle width direction corresponding to the calculated tilt angle θ. The tilt angle of the carriage 50 corresponding to the tilt angle θ of the captured image g1 may be calculated by geometric theoretical calculation or may be calculated based on measurement data indicating the correlation between the tilt angle θ of the captured image g1 and the tilt angle of the carriage 50. In the latter case, the measurement data is stored in advance into a storage such as a ROM.

0078 When the tilt angle of the carriage 50 in the vehicle width direction calculated by the tilt angle calculation unit 33 is equal to or greater than a predetermined amount, the power supply control unit 26 executes the power supply from the power supply unit 28 of the unmanned conveying vehicle 10 to the power receiving unit 63 of the carriage 50. On the other hand, when the tilt angle of the carriage 50 in the vehicle width direction is less than the predetermined amount, the power supply control unit 26 does not execute the power supply from the power supply unit 28 to the power receiving unit 63.

0079 In this configuration, when the tilt angle of the carriage 50 detected by the tilt detection mechanism 35 is equal to or greater than the predetermined amount, electric power is supplied from the power supply unit 28 to the power receiving unit 63 of the carriage 50 under control by the power supply control unit 26. The supplied electric power is converted into direct-current power by the power receiving circuit 64 and then supplied to the travel motor 75 of the carriage 50. The travel motor 75 supplied with the electric power rotationally drives the driving wheel 70. Accordingly, when the tilt angle of the carriage 50 in the vehicle width direction reaches or exceeds the predetermined amount, the driving wheel 70 of the carriage 50 is rotated. Thereby, the traveling stability of the carriage 50 is improved. Consequently, the tilt angle of the carriage 50 is reduced.

0080 On the other hand, when the tilt angle of the carriage 50 detected by the tilt detection mechanism 35 is less than the predetermined amount, the power supply control unit 26 does not execute the power supply from the power supply unit 28 of the unmanned conveying vehicle 10 to the power receiving unit 63 of the carriage 50. This prevents the travel motor 75 of the carriage 50 from being unnecessarily driven when the tilt angle of the carriage 50 is relatively small. Consequently, the power consumption of the entire unmanned conveying system 1 is reduced.

0081

### <<Embodiment 5»

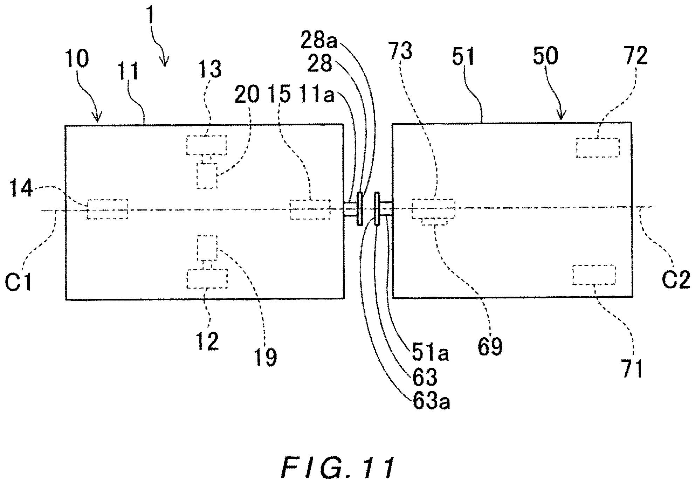

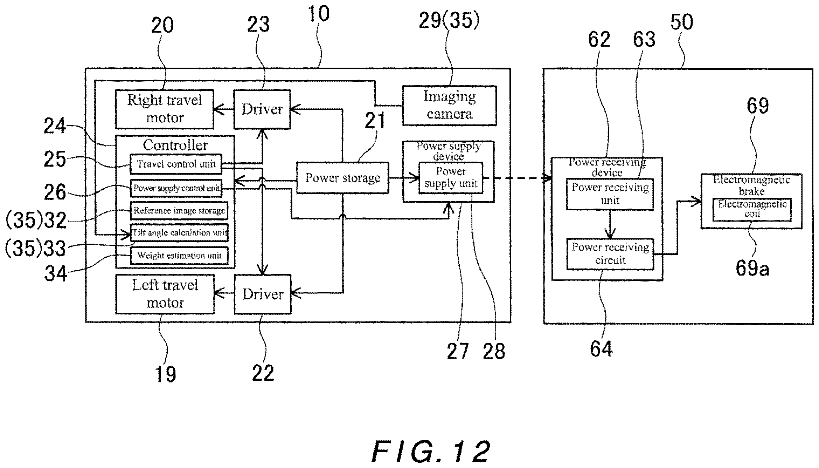

Embodiment 5 of the present invention is illustrated in FIGS. 11 and 12. This embodiment differs from the Embodiment 4 in that the actuator mounted on the carriage 50 is composed of an electromagnetic brake 69 and in that the controller 24 has a weight estimation unit 34.

0082 In this embodiment, differently from the Embodiment 1, the carriage 50 does not have the travel motor 75 and all of the three wheels 71 to 73 are driven wheels. The front driven wheel 73 has an excitation-operative electromagnetic brake 69 attached thereto that applies a decelerating force to the carriage 50. The electromagnetic brake 69 includes an electromagnetic coil 69a. The electromagnetic brake 69 generates a braking force by pressing a friction member (not shown) against the driven wheel 73 using an electromagnetic force generated by energization of the electromagnetic coil 69a. In the example shown in FIG. 11, the electromagnetic brake 69 is attached only to the front driven wheel 73. However, the present invention is not limited thereto and the electromagnetic brake 69 may be attached to each of the three driven wheels 71 to 73.

0083 The controller 24 of the unmanned conveying vehicle 10 further has a weight estimation unit 34 that estimates a weight of the object loaded on the carriage 50.

0084 The weight estimation unit 34 estimates a weight of the loaded object on the carriage 50 based on the tilt angle of the carriage 50 in the vehicle width direction calculated by the tilt angle calculation unit 33 when the carriage 50 turns. This estimation can use, for example, correlation data obtained by measuring in advance the correlation between the weight of the object loaded on the carriage 50 and the tilt angle of the carriage 50 in the vehicle width direction at the time of turning of the carriage 50. Alternatively, for example, the tilt angle calculation unit 33 may be configured to calculate a maximum value of the tilt angle of the carriage 50 in the vehicle width direction occurring during straight traveling of the unmanned conveying vehicle 10, and the weight estimation unit 34 may be configured to estimate a weight of the loaded object (loaded weight) on the carriage 50 based on the calculated maximum value of the tilt angle.

0085 When the travel control unit 25 stops the unmanned conveying vehicle 10 in the state where the loaded weight on the carriage 50 estimated by the weight estimation unit 34 is equal to or greater than a predetermined weight, the power supply control unit 26 executes the power supply from the power supply unit 28 of the unmanned conveying vehicle 10 to the power receiving unit 63 of the carriage 50 so as to energize the electromagnetic coil 69a to actuate the electromagnetic brake 69. On the other hand, when the travel control unit 25 stops the unmanned conveying vehicle 10 in the state where the loaded weight on the carriage 50 estimated by the weight estimation unit 34 is less than the predetermined weight, the power supply control unit 26 does not execute the power supply from the power supply unit 28 to the power receiving unit 63.

0086 Thus, in the unmanned conveying system 1 according to this embodiment, when the unmanned conveying vehicle 10 is stopped in the state where the loaded weight on the carriage 50 is equal to or greater than the predetermined weight, electric power is supplied from the power supply unit 28 of the unmanned conveying vehicle 10 to the power receiving unit 63 of the carriage 50 to actuate the electromagnetic brake 69. This prevents the carriage 50 from colliding with the rear of the unmanned conveying vehicle 10 due to the inertia force when stopping. On the other hand, when the loaded weight on the carriage 50 is less than the predetermined weight, the power supply from the power supply unit 28 to the power receiving unit 63 is not executed. This prevents the electromagnetic brake 69 from being unnecessarily actuated when the loaded weight on the carriage 50 is relatively small. Consequently, an increase in the power consumption of the entire system is prevented.

0087

### <<Other Embodiments>>

In the foregoing embodiments, the travel motor 75 and the electromagnetic brake 69 are described as examples of the actuator mounted on the carriage 50. However, the actuator is not limited to them. The actuator may be, for example, a working robot mounted on the carriage 50 or an electric lifter lifting an object.

0088 In the foregoing embodiments, the power supply control unit 26 executes the power supply control only when the towing mode for towing the carriage 50 is set on the operation panel. However, the present invention is not limited thereto. For example, wireless communication units may be respectively provided on the power supply device 27 and the power receiving device 62, and the power supply control unit 26 may be configured to execute the power supply control when communication (for example, infrared communication) between the wireless communication units is established.

0089 In the foregoing embodiments, the power supply from the power supply unit 28 to the power receiving unit 63 is performed in a non-contact manner. However, the present invention is not limited thereto. The power supply may be performed in a contact manner.

0090 Any combination of the above-described embodiments is encompasses by the present invention.

0091 It should be noted that the foregoing description of the embodiments is not limitative but illustrative in all aspects. One skilled in the art would be able to make variations and modifications as appropriate. The scope of the invention is not defined by the above-described embodiments, but is defined by the appended claims. Further, the scope of the invention encompasses all modifications made from the embodiments within a scope equivalent to the scope of the claims.

### Reference Signs List

0092
- 1: Unmanned conveying system
- 10: Unmanned conveying vehicle
- 12: Left driving wheel (unmanned conveying vehicle wheel)
- 13: Right driving wheel (unmanned conveying vehicle wheel)
- 19: Left travel motor (travel drive source)
- 20: Right travel motor (travel drive source)
- 21: Power storage
- 25: Travel control unit
- 26: Power supply control unit
- 28: Power supply unit
- 28L: Left power supply unit
- 28R: Right power supply unit
- 28a: Power supply surface
- 29: Imaging device (tilt detection mechanism)
- 30: Marker (tilt detection mechanism)
- 32: Reference image storage (storage, tilt detection mechanism)
- 33: Tilt angle calculation unit (tilt detection mechanism)
- 34: Weight estimation unit
- 35: Tilt detection mechanism
- 40: Controller
- 50: Carriage
- 52: Left driving wheel (driving wheel)
- 53: Right driving wheel (driving wheel)
- 60: Left travel motor (actuator)
- 61: Right travel motor (actuator)
- 63: Power receiving unit
- 63L: Left power receiving unit
- 63R: Right power receiving unit
- 63a: Power receiving surface
- 69: Electromagnetic brake (actuator, braking actuator)
- 70: Driving wheel
- 75: Travel motor (actuator)
- g1: Captured image
- g2: Reference image

## Claims

1. A conveying vehicle comprising:
a power storage;
a travel drive source configured to drive a wheel by being driven by electric power stored in the power storage;
a travel control unit configured to control the travel drive source; and
a power supply unit configured to supply electric power stored in the power storage to another vehicle.

2. The conveying vehicle according to claim 1, **characterized in that**:
the other vehicle has an actuator configured to be actuated by receiving supply of electric power; and
the power supply unit is configured to supply electric power stored in the power storage to the actuator provided on the other vehicle.

3. The conveying vehicle according to claim 1, **characterized in that**: the power supply unit is configured to supply the electric power by non-contact power supply.

4. The conveying vehicle according to claim 1, **characterized in that**:
the other vehicle has a power receiving unit configured to receive the electric power from the power supply unit;
a power supply surface of the power supply unit and a power receiving surface of the power receiving unit are disposed to face each other with a gap therebetween in a vertical direction; and
the power supply unit is configured to supply the electric power by non-contact power supply.

5. An unmanned conveying system including an unmanned conveying vehicle and a towed vehicle to be towed by the unmanned conveying vehicle, **characterized in that**:
the unmanned conveying vehicle has: a power storage; a travel drive source configured to drive a wheel of the unmanned conveying vehicle by being driven by electric power stored in the power storage; a travel control unit configured to control the travel drive source; a power supply unit configured to supply electric power stored in the power storage to the towed vehicle; and a power supply control unit configured to control power supply performed by the power supply unit;
the towed vehicle has: a power receiving unit configured to receive the electric power from the power supply unit provided on the unmanned conveying vehicle; and an actuator configured to be driven by the electric power received by the power receiving unit; and
the power supply control unit is configured to control operation of the actuator by controlling power supply from the power supply unit to the power receiving unit provided on the towed vehicle.

6. The unmanned conveying system according to claim 5, **characterized in that** the power supply unit is configured to supply the electric power to the power receiving unit by non-contact power supply.

7. The unmanned conveying system according to claim 5, **characterized in that**:
a power supply surface of the power supply unit and a power receiving surface of the power receiving unit are disposed to face each other with a gap therebetween in a vertical direction; and
the power supply unit is configured to supply the electric power to the power receiving unit by non-contact power supply.

8. The unmanned conveying system according to claim 5, **characterized in that**:
the actuator provided on the towed vehicle includes a travel motor configured to rotate by receiving supply of electric power; and
the towed vehicle has a driving wheel to be rotationally driven by the travel motor.
